# EUROPEAN PATENT SPECIFICATION

(11) **EP 2 821 626 B1**
(45) Date of publication and mention of the grant of the patent: **02.03.2016**
(21) Application number: 14175043.0
(22) Date of filing: 30.06.2014
(51) Int. Cl.: F02F 3/00, F02F 3/22

(54) **Piston assembly**
Kolbenanordnung
Ensemble de piston

(30) Priority: 01.07.2013 KR 20130076354
(43) Date of publication of application: 07.01.2015
(73) Proprietor: Samyoung Machinery Co., Ltd, Gongju-si, Chungcheongnam-do (KR)
(72) Inventor: Han, Geum Tai, Daejeon (KR)
(74) Representative: Zardi, Marco

(56) References cited:
- WO-A1-2005/121537
- CH-A- 326 687
- DE-A1-102006 055 251
- GB-A- 1 230 535

## Description

### RELATED APPLICATIONS

### BACKGROUND

### 1. Field

One or more embodiments of the present invention relate to a piston assembly of a diesel engine, and more particularly, to a piston assembly including a piston crown formed of nodular graphite cast iron and having ribs therein.

### 2. Description of the Related Art

In a general internal combustion engine, a piston transmits power to a connecting rod while vertically reciprocating along an inner wall of a cylinder during the intake-compression-combustion-exhaust cycle.

In the case of a high-performance engine, an upper structure (called a piston crown) of a piston including an combustion side and piston ring grooves is exposed to high-temperature, high-pressure combustion conditions during engine operation and is thus manufactured by a forging method for obtaining high-quality mechanical characteristics, and the rest of the piston (called a piston skirt) exposed to relatively less severe conditions is formed of a material such as cast iron. However, if piston crowns are manufactured by a forging method, a relatively expensive material is used, and it is difficult to perform a machining process on the piston crowns. Therefore, the productivity of manufacturing is lowered, and the prices of pistons are increased.

In addition, since such a piston crown is inefficiently cooled, the outer diameter of the piston crown may become larger than the inner diameter of a cylinder liner due to thermal expansion during engine operation, and in this case, the piston crown may melt and stick to the cylinder liner. To prevent this, the piston crown and the cylinder liner may be fitted with a large clearance therebetween. However, a large clearance lowers combustion efficiency and thus increases the generation of environmentally harmful pollutants such as fumes or NOx,

In the related art, one-piece pistons are formed by casting a piston crown and a piston skirt with the same material such as cast iron, and some of such one-piece pistons have ribs formed therein. However, it is difficult to form oil galleries for storing oil in such one-piece pistons due to limitations of casting, and thus the one-piece pistons have low cooling efficiency, thereby generating large amounts of environmentally harmful pollutants like in the case of assembly type pistons formed of forged steel and cast iron. In addition, such one-piece pistons have low degrees of structural strength and are thus not suitable for high-power engines having high combustion pressure.

A method of forming ribs on a piston crown is disclosed in Korean Patent Laid-open Publication No. 2010-0127449. However, the method is for a structure in which a piston assembly is rotated and this application is to enhance the strength of a piston crown in a non-rotating structure is required. GB 1230535A discloses a piston comprising a cooling chamber partly filled with liquid during operation and housing a guide member enclosing a passage of contracting cross-section extending axially of the piston and open at both ends to the part of the chamber outside the member, fins project radially inwards from the piston wall, the coolant inlet duct and outlet duct communicate with the chamber at points spaced by at least one fin and at least some of the fins have a port therethrough in the region where the piston wall merges with the crown.

### SUMMARY

One or more embodiments of the present invention include a piston assembly in which a forged piston crown used for the cooling performance and structural strength problems, is replaced with a piston crown formed by casting.

Additional aspects will be set forth in part in the description which follows and, in part, will be apparent from the description, or may be learned by practice of the presented embodiments.

According to an embodiment of the present invention, a piston assembly includes: a piston skirt; and a piston crown formed by a casting method and coupled to an upper, portion of the piston skirt by using a stud bolt, wherein oil galleries are formed between an upper wall of the piston skirt and an upper wall of the piston crown, wherein a partial annular part having a partial circular ring shape and a plurality of ribs having a linear shape and radially arranged to form oil channels for flowing cooling oil are formed on the upper wall of the piston crown, and the plurality of ribs are divided into outer ribs and inner ribs by the partial annular part.

Coupling parts may be formed in a center region of the piston crown and a center region of the piston skirt, and the coupling parts may be coupled by using the stud bolt. In addition, some of the plurality of ribs which extend to the coupling part formed in the center region of the piston crown and remaining ones of the plurality of ribs which do not extend to the coupling part formed in the center region of the piston crown may be alternately arranged.

A lubrication passage may be formed in the upper wall of the piston skirt at a position apart form the center region of the piston skirt.

A partial annular part corresponding to the partial annular part formed on the upper wall of the piston crown may be formed on the upper wall of the piston skirt.

An oil passage may be formed in the annular part formed on the upper wall of the piston crown or the annular part formed on the upper wall of the piston skirt.

Heights of the plurality of ribs may be decreased in directions from a sidewall to the center region of the piston crown.

### BRIEF DESCRIPTION OF THE DRAWINGS

These and/or other aspects will become apparent and more readily appreciated from the following description of the embodiments, taken in conjunction with the accompanying drawings in which:
FIG. 1 is a cross-sectional view illustrating a piston assembly according to the state of art.
FIG. 2 is a bottom view illustrating a piston crown of the piston assembly illustrated in FIG. 1;
FIG. 3 is a cross-sectional view illustrating oil passages in the piston crown of the piston assembly illustrated in FIG. 1;
FIG. 4 is a cross-sectional view illustrating oil passages in a piston skirt of the piston assembly illustrated in FIG. 1;
FIG. 5 is a cross-sectional view illustrating a piston assembly according to an embodiment of the present invention; and
FIG. 6 is a bottom view illustrating a piston crown of the piston assembly illustrated in FIG. 5.

### DETAILED DESCRIPTION

Reference will now be made in detail to embodiments, examples of which are illustrated in the accompanying drawings. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items.

Hereinafter, exemplary embodiments of the present invention will be described in detail with reference to the accompanying drawings. In the drawings, reference numerals are consistently used, and like reference numeral denote like elements.

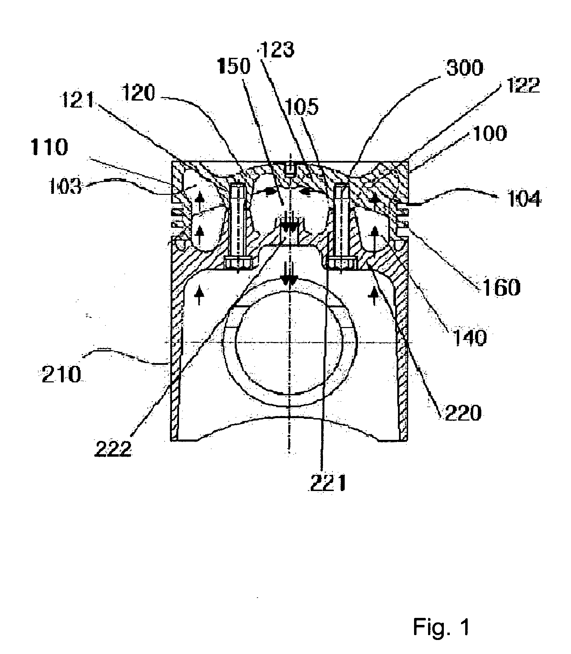

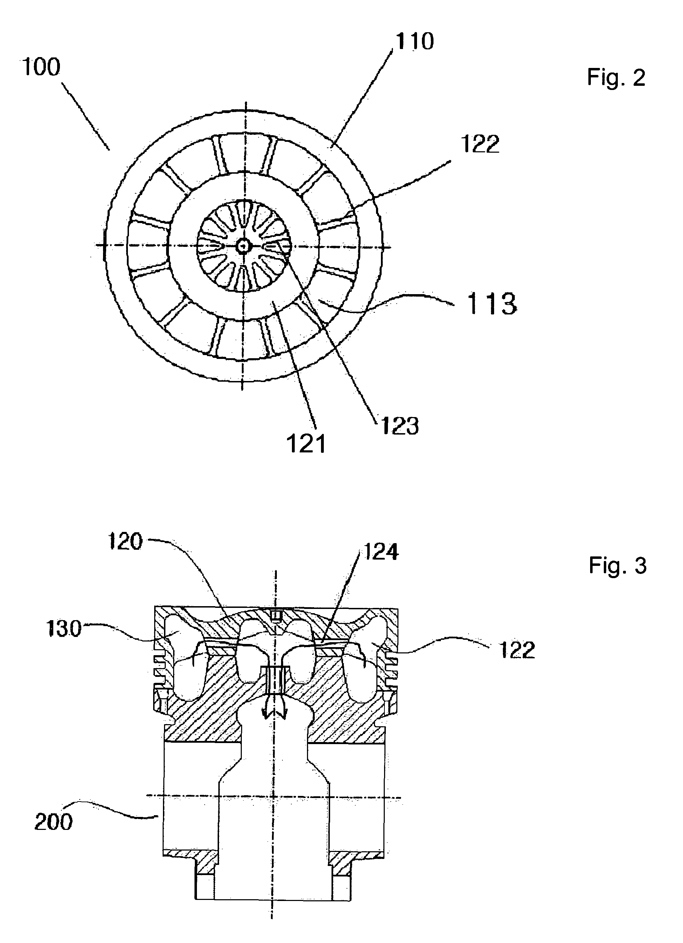

FIG. 1 illustrates a piston assembly according to the state of art. In the piston assembly, an upper piston crown 100 and a lower piston skirt 200 (refer to Fig. 3) are coupled together using stud bolts 300.

FIG. 2 is a bottom view illustrating the piston crown 100 of the piston assembly illustrated in FIG. 1.

The piston skirt 200 is disposed in an inner wall of a cylinder liner and is configured to move while making frictional contact with the inner wall of the cylinder liner. In addition, the piston crown 100 is assembled on top of the piston skirt 200 so as to be directly exposed to heat and pressure of combustion gas. The piston skirt 200 and the piston crown 100 are coupled together by using the stud bolts 300.

The piston skirt 200 includes a cylindrical sidewall 210 and an upper wall 220, and a circular annular part 221 and a central lubrication passage 222 are formed on the upper wall 220. The annular part 221 makes contact with an annular part 121 of an upper wall 120 of the piston crown 100.

Similarly, the piston crown 100 includes a sidewall 110 and the upper wall 120, and downwardly-extending ribs 122 and 123 and the annular part 121 are formed on the upper wall 120. The annular part 121 has a circular ring shape and makes contact with the annular part 221 of the piston skirt 200.

The piston crown 100 and the annular part 221 of the piston skirt 200 are coupled together by using the stud bolts 300.

The ribs 122 and 123 of the piston crown 100 extend linearly in radial directions and are divided into outer ribs 122 and inner ribs 123 by the annular part 121.

The ribs 122 and 123 form oil channels 130 (refer to FIG. 3) for oil supplied to the inside of the piston assembly.

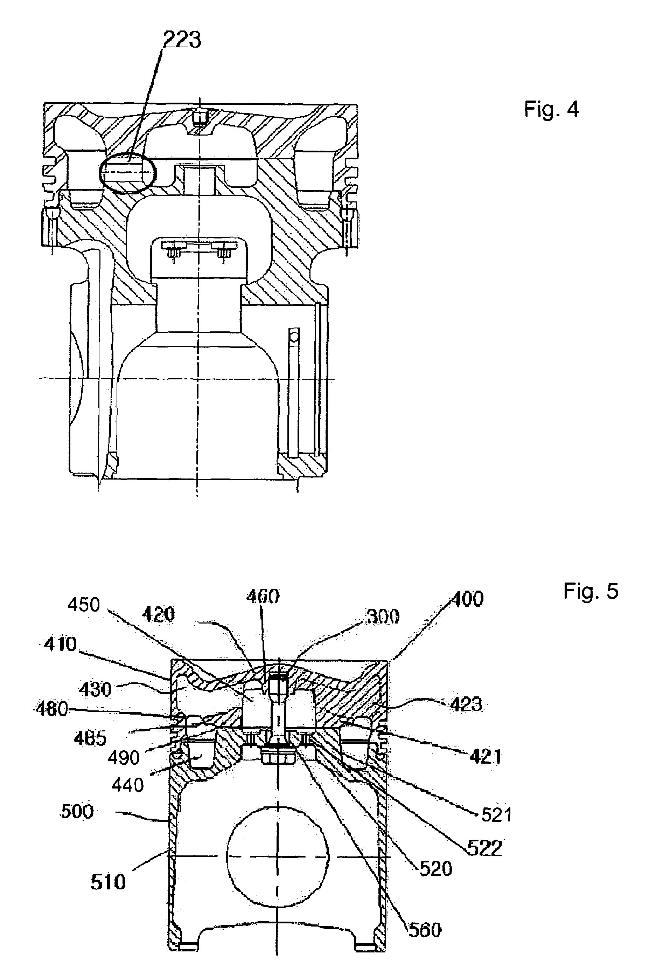

In FIG. 1, oil supply passages are denoted by arrows. Oil is supplied to an outer oil gallery 140 of the piston crown 100 through a portion of the upper wall 220 adjacent to the sidewall 210 of the piston skirt 200. Then, the oil is supplied to a central oil gallery 150 through oil passage(s) such as oil hole(s) or slot(s) 223 or 124 (refer to FIGS. 3 and 4) formed in the annular part 221 or 121 of the piston skirt 200 or the piston crown 100. Thereafter, the oil is returned to the piston skirt 200 through the central lubrication passage 222 of the piston skirt 200.

Alternatively, oil may be supplied through the oil supply passages in a direction opposite the above-described direction.

FIG. 3 illustrates oil holes 124 formed in the annular part 121 of the upper wall 120 of the piston crown 100, and FIG. 4 illustrates an oil hole 223 formed in the annular part 221 of the upper wall 220 of the piston skirt 200.

As described above, the ribs 122 and 123 of the piston crown 100 are divided into the outer ribs 122 and the inner ribs 123 by the annular part 121 having a circular ring shape and extending downward from the upper wall 120. The heights of the ribs 122 and 123 are decreased in directions from the outer ribs 122 to the inner ribs 123 (refer to a portion denoted by reference numeral 160 in FIG. 1).

Referring to FIG. 1, reference numeral 160 refers to a line connecting lower ends of the inner ribs 123 and the outer ribs 122, and the heights of the ribs 122 and 123 are decreased in a direction along a line 160 toward a center region from the sidewall 110.

The annular part 221 of the piston skirt 200 supports the annular part 121 of the piston crown 100, and the ribs 122 and 123 of the piston crown 100 support the upper wall 120 of the piston crown 100 as reinforcement structures. Therefore, the piston assembly may be more durable against combustion pressure applied to the piston crown 100.

Furthermore, the ribs 122 and 123 increase the area of the piston crown 100 making contact with cooling oil and function as guides for the cooling oil. That is, the ribs 122 and 123 form the oil channels 130 for smoothly circulating the cooling oil and improving the effect of cooling.

According to the embodiment of the present invention, the piston assembly has improved structural strength and resistance to thermal stress. Therefore, the piston crown 100 of the piston assembly may be manufactured through a casting process using cast steel, cast iron, or nodular graphite cast iron, and thus the productivity of a manufacturing process and the processability of the piston crown 100 may be markedly improved.

Furthermore, in this case, the oil galleries 140 and 150 and the ribs 122 and 123 may be generated from a material state without having to perform an additional machining process.

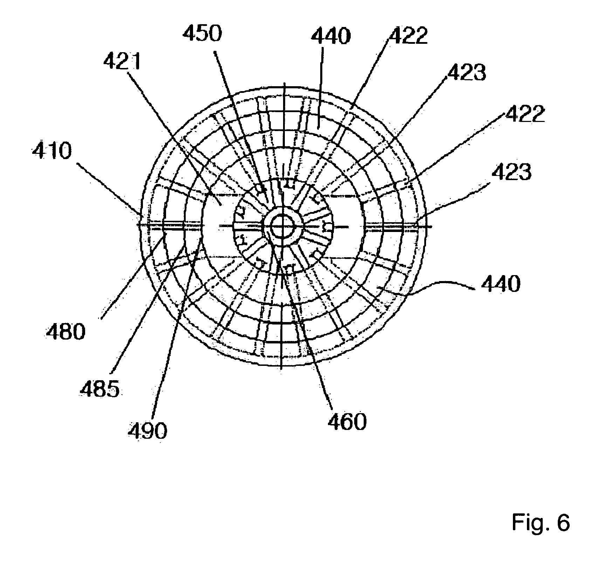

FIG. 5 is a cross-sectional view illustrating a piston assembly according to an embodiment of the present invention, and FIG. 6 is a bottom view illustrating a piston crown 400 of the piston assembly illustrated in FIG. 5.

The piston assembly illustrated in FIG. 5 is different from the piston assembly illustrated in FIG. 1, in that coupling parts 460 and 560 are formed in center regions of the piston crown 400 and a piston skirt 500 for a stud bolt 300, and lubrication passages 522 are formed in the piston skirt 500 at positions apart from the center of the piston skirt 500.

In addition, as shown in the bottom view of FIG. 6, ribs 422 extending to the coupling part 460 formed in the center region of the piston crown 400 and ribs 423 not extending to the coupling part 460 are alternately formed.

Since the distances between the ribs 422 and 423 are decreased in a direction toward the center region, the ribs 422 and 423 respectively having relatively long lengths and short lengths are alternately formed.

In addition, as shown in FIG. 6, the ribs 422 and 423 are divided into inner and outer ribs by a partial annular part 421 extending from an upper wall 420 of the piston crown 400. The partial annular part 421 has a partial circular ring shape instead of a complete circular ring shape.

In the piston assembly illustrated in FIGS. 5 and 6, cooling oil may be supplied to an oil gallery 440 through a portion of an upper wall 520 of the piston skirt 500 adjacent to a sidewall 510 of the piston skirt 500, and then may flow along oil channels 430 formed by the ribs 422 and 423 to a center region. Thereafter, the cooling oil may return to the piston skirt 500 through the lubrication passages 522. Alternatively, the cooling oil may be circulated in a direction opposite the above-described direction.

In FIGS. 5 and 6, like reference numerals denote like elements.

As described above, according to the above embodiment of the present invention, cooling oil may make contact with a larger area of the piston assembly and may be smoothly circulated in the piston assembly owing to the oil channels, and thus the piston assembly may be cooled more efficiently. In addition, since the radially-arranged ribs function as reinforcement structures for supporting an combustion side (that is, the upper wall) of the piston crown to which combustion pressure is directly applied, the piston crown may become more resistant to combustion pressure.

Therefore, the piston assembly of the embodiment of the present invention may have improved quality, reliability, and a long lifespan as compared with piston assemblies of the related art, and may be applied to high-power engines.

Furthermore, owing to the improved characteristics of the piston assembly, the piston crown may be formed by a casting method instead of a forging method. Thus, the productivity of a manufacturing process of the piston crown may be improved, and the piston crown may be machined more easily.

It should be understood that the exemplary embodiments described herein should be considered in a descriptive sense only and not for purposes of limitation.

While one or more embodiments of the present invention have been described with reference to the figures, it will be understood by those of ordinary skill in the art that various changes in form and details may be made therein without departing from the scope of the present invention as defined by the following claims.

## Claims

1. A piston assembly comprising:
a piston skirt (200); and
a piston crown (100) formed by a casting method and coupled to an upper portion of the piston skirt (200) by using a stud bolt,
wherein oil galleries (140, 150) are formed between an upper wall of the piston skirt (200) and an upper wall of the piston crown (100),
a partial annular part (421) having a partial circular ring shape and a plurality of ribs (422, 423) having a linear shape and radially arranged to form oil channels for flowing cooling oil are formed on the upper wall of the piston crown (100), and the plurality of ribs (422, 423) are divided into outer ribs and inner ribs by the partial annular part (421), wherein a lubrication passage (522) is formed in the upper wall of the piston skirt (200) at a position apart form the center region of the piston skirt (200), **characterised in that**
coupling parts (460, 560) are formed in a center region of the piston crown (100) and a center region of the piston skirt (200), and the coupling parts (460, 560) are coupled by using the stud bolt, and
some of the plurality of ribs which extend to the coupling part formed in the center region of the piston crown (100) and remaining ones of the plurality of ribs which do not extend to the coupling part formed in the center region of the piston crown (100) are alternately arranged,

2. The piston assembly of claim 1, wherein a partial annular part (421) corresponding to the partial annular part (421) formed on the upper wall of the piston crown (100) is formed on the upper wall of the piston skirt (200), and
an oil passage is formed in the partial annular part (421) formed on the upper wall of the piston crown (100) or the partial annular part (421) formed on the upper wall of the piston skirt (200).

3. The piston assembly of claim 2, wherein heights of the plurality of ribs are decreased in directions from a sidewall to the center region of the piston crown (100).

## Patentansprüche

1. Kolbenbaugruppe, umfassend:
- ein Kolbenhemd (200); und
- einen Kolbenboden (100), der durch ein Gießverfahren ausgebildet und mit einem oberen Abschnitt des Kolbenhemds (200) durch Verwendung eines Gewindebolzens verbunden ist;
- wobei zwischen einer oberen Wand des Kolbenhemds (200) und einer oberen Wand des Kolbenbodens (100) Ölkanäle (140, 150) ausgebildet sind,
- wobei ein teilweises ringförmiges Teil (421) mit einer teilweisen Kreisringform und eine Vielzahl von Rippen (422, 423), die eine lineare Form aufweisen und zur Bildung von Ölkanälen zum Strömenlassen von Kühlöl radial angeordnet sind, an der oberen Wand des Kolbenbodens (100) ausgebildet sind, und die Vielzahl von Rippen (422, 423) durch das teilweise ringförmige Teil (421) in äußere Rippen und innere Rippen aufgeteilt sind;
- wobei in der oberen Wand des Kolbenhemds (200) an einer Position entfernt von dem mittleren Bereich des Kolbenhemds (200) ein Schmierungsdurchgang (522) ausgebildet ist;
**dadurch gekennzeichnet, dass**
- Verbindungsteile (460, 560) in einem zentralen Bereich des Kolbenbodens (100) und einem zentralen Bereich des Kolbenhemds (200) ausgebildet sind, und die Verbindungsteile (460, 560) durch Verwendung des Gewindebolzens verbunden sind; und
- einige der Vielzahl von Rippen, die sich zu dem Verbindungsteil erstrecken, das in dem zentralen Bereich des Kolbenbodens (100) ausgebildet ist, und verbleibende der Vielzahl von Rippen, die sich nicht zu dem Verbindungsteil erstrecken, das in dem zentralen Bereich des Kolbenbodens (100) ausgebildet ist, abwechselnd angeordnet sind.

2. Kolbenbaugruppe nach Anspruch 1, wobei ein teilweises ringförmiges Teil (421), das dem teilweisen ringförmigen Teil (421) entspricht, das an der oberen Wand des Kolbenbodens (100) ausgebildet ist, an der oberen Wand des Kolbenhemds (200) ausgebildet ist; und
in dem teilweisen ringförmigen Teil (421), das an der oberen Wand des Kolbenbodens (100) ausgebildet ist, oder in dem teilweisen ringförmigen Teil (421), das an der oberen Wand des Kolbenhemds (200) ausgebildet ist, ein Öldurchgang ausgebildet ist.

3. Kolbenbaugruppe nach Anspruch 2, wobei die Höhen der Vielzahl von Rippen in den Richtungen von einer Seitenwand zu dem zentralen Bereich des Kolbenbodens (100) geringer werden.

## Revendications

1. Ensemble piston comprenant :
une jupe de piston (200), et
une couronne de piston (100) obtenue par une méthode de moulage et couplée à une portion supérieure de la jupe de piston (200) par l'utilisation d'un goujon,
dans lequel des sillons pour l'huile (140, 150) sont réalisées entre une paroi supérieure de la jupe de piston (200) et une paroi supérieure de la couronne de piston (100),
une pièce annulaire partielle (421) ayant une forme en anneau circulaire partiel et une pluralité de nervures (422, 423) ayant une forme linéaire et disposées radialement pour former des canaux pour l'huile pour la circulation de l'huile de refroidissement est formée sur la paroi supérieure de la couronne de piston (100), et la pluralité de nervures (422, 423) est divisée en nervures externes et nervures internes par la pièce annulaire partielle (421),
dans lequel un passage de lubrification (522) est formé dans la paroi supérieure de la jupe de piston (220) au niveau d'une position séparée de la région centrale de la jupe de piston (200),
**caractérisé en ce que**
des pièces de couplage (460, 560) sont formées dans une région centrale de la couronne de piston (100) et une région centrale de la jupe de piston (200) et les pièces de couplage (460, 560) sont couplées en utilisant le goujon, et
une partie de la pluralité de nervures s'étend à la pièce de couplage formée dans la région centrale de la couronne de piston (100) et celles restantes de la pluralité de nervures qui ne s'étendent pas à la pièce de couplage formée dans la région centrale de la couronne de piston (100) sont disposées en alternance,

2. Ensemble piston selon la revendication 1, **caractérisé en ce qu'**une pièce annulaire partielle (421) correspondant à la pièce annulaire partielle (421) formée sur la paroi supérieure de la couronne de piston (100) est réalisée sur la paroi supérieure de la jupe de piston (200), et
un passage pour l'huile est formé dans la pièce annulaire partielle (421) réalisée dans la paroi supérieure de la couronne de piston (100) ou bien la pièce annulaire partielle (421) formée dans la paroi supérieure de la jupe de piston (200).

3. Ensemble piston selon la revendication 2, **caractérisé en ce que** les hauteurs de la pluralité de nervures diminuent dans les directions s'étendant d'une paroi latérale à la région centrale de la couronne de piston (100).
